(19) Europäisches Patentamt
European Patent Office
Office européen des brevets

(11) Publication number: **0 011 640**
**B1**

(12) # EUROPEAN PATENT SPECIFICATION

(45) Date of publication of patent specification: **27.04.83**

(51) Int. Cl.³: **C 08 G 63/18,**
**C 08 G 63/60**

(21) Application number: **79900483.3**

(22) Date of filing: **27.04.79**

(86) International application number:
**PCT/US79/00267**

(87) International publication number:
**WO 79/01030 29.11.79 Gazette 79/24**

(54) **POLYESTERS OF 4-CARBOXYBENZENEPROPIONIC ACID.**

(30) Priority: **04.05.78 US 902574**
**13.11.78 US 959829**

(43) Date of publication of application:
**11.06.80 Bulletin 80/12**

(45) Publication of the grant of the patent:
**27.04.83 Bulletin 83/17**

(84) Designated Contracting States:
**DE FR GB**

(56) References cited:
**DE - A - 2 520 820**
**US - A - 3 368 998**

**The file contains technical information submitted after the application was filed and not included in this specification**

(73) Proprietor: **EASTMAN KODAK COMPANY**
**343 State Street**
**Rochester, New York 14650 (US)**

(72) Inventor: **JACKSON Jr., Winston Jerome**
**4408 Greensprings Circle**
**Kingsport, TN 37664 (US)**
Inventor: **KUHFUSS, Herbert Fred**
**6116 Violet Street Route 9**
**Kingsport, TN 37663 (US)**

(74) Representative: **Parent, Yves**
**Kodak-Pathé Département des Brevets et Licences 30, rue des Vignerons B.P. 60**
**F-94302 Vincennes Cedex (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

**EP 0 011 640 B1**

Copolyesters of 4-carboxybenzenepropionic acid

*Technical Field*

This invention relates to new high molecular weight copolyesters prepared from 4-carboxybenzenepropionic acid, a p-hydroxy benzoic acid and hydroquinone.

For commercial uses polyesters of improved mechanical properties are being sought, and in order to increase the mechanical properties it is usually necessary to increase the molecular weight of the polyesters. As the molecular weight is increased the melting point of the polyesters increases, resulting in polyesters that are difficult to process in present commercial equipment. To be useful commercially the polyesters must have excellent processability and excellent mechanical properties. The polyesters must also be stable at elevated temperatures and for some uses good light stability is required.

*Background Art*

Heat stability is an important property for many polyester applications. For example, if a polyester is used close to an automobile engine or in an electronic apparatus in which the parts become heated by hot vacuum tubes, it is necessary that the polyester be stable under these conditions.

German Offenlegungsschrift 2,520,820 discloses polyesters that are prepared from 4-carboxybenzene-oxyacetic acid and unsubstituted diols. These polyesters apparently have desirable properties, but the polyesters are not sufficiently stable at elevated temperatures.

GB-A-1,000,200 discloses homopolyesters prepared from aromatic diols and various diacids including 4-carboxybenzene-propionic acid. There is in this reference neither mention nor suggestion of the unexpected characteristics that are obtainable with the copolyesters of the present invention.

Also, light stability is an important property for many polyester uses. Some polyesters, such as the polyesters prepared from terephthalic acid and bisphenol A diacetate, are severely discolored when exposed to light for long periods of time.

*Disclosure of Invention*

The copolyesters of this invention have excellent mechanical properties and they can be processed in current commercial melt-processing equipment. Also, these copolyesters have better heat stability and light stability than prior art polyesters.

The copolyesters of this invention are prepared by polymerizing 4-carboxybenzenepropionic acid with hydroquinone and a p-hydroxybenzoic acid. This copolyester can be defined as a copolyester having the following radicals

(A) 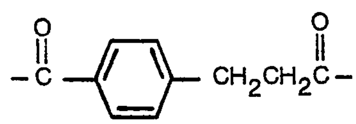

(B) 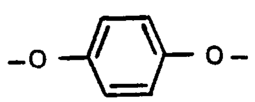 and

(C) 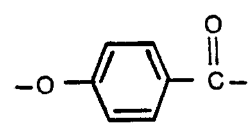

wherein the range of radical (C) is 10 to 90 mole percent, based on the sum of radicals (A) and (C). In a preferred embodiment, the range of radical (C) is from 30 to 80 mole percent. The co-polyester is a liquid crystal co-polyester.

The copolyesters of this invention have an inherent viscosity of at least 0.4 and preferably at least 0.8. The acid portion of the copolyesters can be modified with up to 50 mole percent of at least one aliphatic, alicyclic or aromatic dicarboxylic acid. These modifying acids include terephthalic acid, isophthalic acid, 2,6-naphthalenedicarboxylic acid, cis or trans-1,4-cyclohexanedicarboxylic acid, 4,4'-oxydibenzoic acid, monochloroterephthalic acid, a dichloroterephthalic acid, methyl terephthalic acid, a dimethylterephthalic acid and 4,4'-diphenyldicarboxylic acid.

Also minor amounts of substituted hydroquinones such as chloro, bromo and methyl hydroquinone can be used so long as the thermal stability of the copolyesters of this invention is not adversely affected.

The diacyl derivatives of hydroquinone can be used to prepare the copolyesters of this invention.

The acetyl and propionyl derivatives are preferred, but the butyryl, isobutyryl, or benzoyl derivatives are examples of others which may also be used.

A copolyester of this invention can be prepared from 4-carboxybenzenepropionic acid, a diacyl ester of hydroquinone and a p-acyloxybenzoic acid.

The polymers of the invention can be made by techniques such as by acidolysis of the hydroquinone diacetate with the acid components. The reactants are heated at about 260°C until most of the monocarboxylic acid has evolved. The temperature of the melt is then increased to about 325°C (up to 360°C for the higher-melting compositions), a vacuum of about 0.5 millimeter is applied, and stirring is continued until a high-melt viscosity polymer is obtained. If the polymer solidifies, its molecular weight may be increased to a sufficient value by heating particles of the polymer in an inert atmosphere or under reduced pressure at a temperature just below the softening point of the polymer.

Tough films of the polymers are obtained by pressing or by extrusion. Molding plastics having very high impact strength and heat-deflection temperatures are obtained by injection molding at about 350°C.

In addition to plastics, the copolyesters of this invention can be fabricated to give other types of shaped objects such as foamed plastics, fibers, films extruded shapes and coatings. The compositions of this invention also may contain nucleating agents, fibers, pigments, glass fibers, asbestos fibers, antioxidants, stabilizers, plasticizers, lubricants, and other additives.

This invention is further illustrated by the following example. The co-polyester prepared in this example was tested and found to have excellent mechanical properties.

All inherent viscosities were determined at 25°C in a 40/35/25 weight mixture of p-chlorophenol/tetrachloroethane/phenol at a concentration of 0.1 g/ml. The melting points and glass transition temperatures were determined with a differential scanning calorimeter.

The co-polyesters were dried in an oven at 100°C overnight and injection molded to give 63.5 x 9.525 x 1.587 mm tensile bars and 127 x 12.7 x 3.175 mm flexure bars for testing. ASTM procedures were used for measuring the tensile strength and elongation (ASTM D1708), flexural modulus (ASTM D790), Izod impact strength (ASTM D256 Method A), and heat-deflection temperature (ASTM D648).

## Example

A mixture of 14.4 g (0.08 mole) p-acetoxybenzoic acid, 3.88 g (0.02 mole) 4-carboxybenzenepropionic acid, and 4.44 g (0.02 mole) hydroquinone dipropionate was placed in a 100 ml flask equipped with a stirrer, a short distillation column, and an inlet for nitrogen. The flask was evacuated and purged three times with nitrogen before being lowered into a metal bath maintained at 110°C. The mixture was heated under a nitrogen atmosphere with stirring to a temperature of 260°C at which point acetic acid began to distill rapidly from the flask. After the reaction mixture was heated with stirring at this temperature for about 1 hour, the temperature of the bath was increased to 300°C for 30 minutes and then to 350°C. A vacuum of 0.5 mm of mercury was then applied over a period of 10 minutes. After stirring was continued under 0.5 mm of mercury at 350°C for about 10 minutes, a medium melt viscosity, opaque, fibrous, light tan polymer was obtained.

A second co-polyester was prepared in a similar manner, except 4-carboxybenzeneoxyacetic acid was used in place of the 4-carboxybenzenepropionic acid in the first co-polyester and the final reaction temperature was 340°C to limit the considerable color formation.

Ten mil (0.254 mm) films of both co-polyesters were pressed at temperatures ranging from 325 to 350°C and were placed in a 150°C forced air oven. Once a week the films were creased by hand. The number of weeks required for the film to break upon creasing was recorded as heat stability. The following table summarizes the heat stability data for both co-polyesters.

| Polymer | Mole Percent 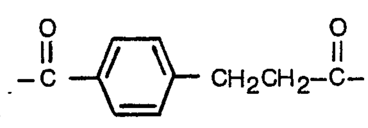 | Mole Percent 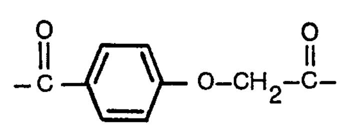 | Heat Stability Weeks to Breaking upon Creasing Film |
|---|---|---|---|
| 1 | 20 | | ≥20 |
| 2 | | 20 | 4 |

The copolyesters of this invention also have improved light stability compared to similar co-polyesters prepared with aromatic dicarboxylic acids other than 4-carboxybenzenepropionic acid. A pressed film of a co-polyester prepared from this acid and bisphenol A diacetate turned only slightly yellow

when exposed for 35 hrs. (40 fading units) in a fadeometer containing a xenon lamp. A film of a similar co-polyester prepared with terephthalic acid and bisphenol A diacetate turned deep yellow at the same time in the test.

## Claims

1. A high molecular weight copolyester characterized in that it contains the following divalent radicals:

(A) 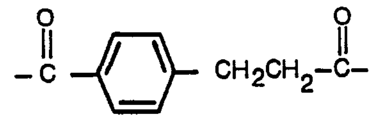

(B) 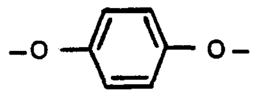 and

(C) 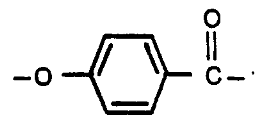

wherein the range of radical (C) is 10 to 90 mole percent, based on the sum of radicals (A) and (C).

2. A co-polyester according to Claim 1 wherein the acid portion of the co-polyester is modified with up to 50 mole percent of an aliphatic, alicyclic or aromatic dicarboxylic acid.

3. A copolyester according to Claim 2 wherein the modifying acid is selected from terephthalic acid, isophthalic acid, 2,6-naphthalenedicarboxylic acid, cis or trans-1,4-cyclohexanedicarboxylic acid, 4,4'-oxydibenzoic acid, monochloroterephthalic acid, a dichloroterephthalic acid, methyl terephthalic acid, a dimethylterephthalic acid and 4,4'-diphenyldicarboxylic acid.

## Revendications

1. Copolyester de masse moléculaire élevée caractérisé en ce qu'il contient les radicaux divalents suivants:

(A) 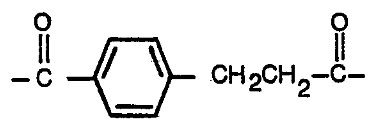

(B) 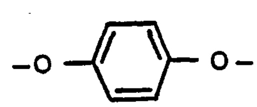 et

(C) 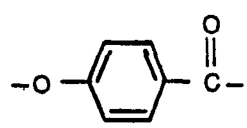

le radical (C) étant présent à raison de 10 à 90 moles%, calculées par rapport à la somme des radicaux (A) et (C).

2. Copolyester conforme à la revendication 1, caractérisé en ce que la teneur en acide du copolyester est modifiée par ajout, jusqu'à 50 mole % d'un acide aliphatique alicyclique ou aromatique dicarboxylique.

3. Copolyester conforme à la revendication 2, caractérisé en ce que l'acide modificateur est choisi parmi l'acide téréphtalique. l'acide isophtalique, l'acide 2,6-naphtalènedicarboxylique, l'acide cis ou trans-1,4-cyclohexanedicarboxylique, l'acide 4,4'-oxydibenzoïque, l'acide monochlorotéréphtalique, l'acide dichlorotéréphtalique, l'acide méthyltéréphtalique, l'acide diméthyltéréphtalique et l'acide 4-4'-diphényldicarboxylique.

**Patentansprüche**

1. Copolyester von hohem Molekulargewicht gekennzeichnet durch die folgenden divalenten Reste:

(A) 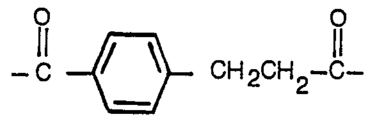

(B) 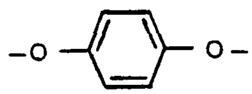 und

(C) 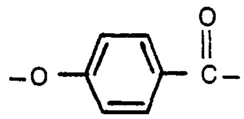

wobei der Bereich an Resten (C) bei 10 bis 90 Mol-%, bezogen auf die Summe der Reste (A) und (C), liegt.

2. Copolyester nach Anspruch 1, dadurch gekennzeichnet, daß der Säureanteil des Copolyesters mit bis zu etwa 50 Mol-% durch eine aliphatische, alicyclische oder aromatische Dicarbonsaüre modifiziert ist.

3. Copolyester nach Anspruch 2, dadurch gekennzeichnet, daß die modifizierende Säure ausgewählt ist aus: Terephthalsäure; Isophthalsäure; 2,6-Naphthalindicarbonsäure; cis- oder trans-1,4-Cyclohexandicarbonsäure; 4,4'-Oxydibenzoesäure; Monochlorterephthalsäure; einer Dichlorterephthalsäure; Methylterephthalsaüre; einer Dimethylterephthalsaüre und 4,4'-Diphenyldicarbonsäure.